(19) Europäisches Patentamt
European Patent Office
Office européen des brevets

(11) **EP 0 907 524 B1**

(12) **EUROPÄISCHE PATENTSCHRIFT**

(45) Veröffentlichungstag und Bekanntmachung des Hinweises auf die Patenterteilung:
**05.11.2003 Patentblatt 2003/45**

(51) Int Cl.⁷: **B60K 41/14**
// F16H61/00, F16H61/02, F16H59/60, F16H59/08

(21) Anmeldenummer: **98907816.7**

(22) Anmeldetag: **15.01.1998**

(86) Internationale Anmeldenummer:
**PCT/DE98/00120**

(87) Internationale Veröffentlichungsnummer:
**WO 98/033673 (06.08.1998 Gazette 1998/31)**

(54) **VERFAHREN UND VORRICHTUNG ZUR STEUERUNG DES ANTRIEBSSTRANGS EINES KRAFTFAHRZEUGS**

METHOD AND DEVICE FOR CONTROLLING THE DRIVE TRAIN OF A MOTOR VEHICLE

PROCEDE ET DISPOSITIF POUR ASSURER LA COMMANDE DE LA CHAINE CINEMATIQUE D'UNE AUTOMOBILE

(84) Benannte Vertragsstaaten:
**DE ES FR IT**

(30) Priorität: **03.02.1997 DE 19703863**

(43) Veröffentlichungstag der Anmeldung:
**14.04.1999 Patentblatt 1999/15**

(73) Patentinhaber: **ROBERT BOSCH GMBH**
**70442 Stuttgart (DE)**

(72) Erfinder:
• **LÖFFLER, Jürgen**
**D-71364 Winnenden (DE)**
• **BOLZ, Martin-Peter**
**D-71720 Oberstenfeld (DE)**
• **HÜLSER, Holger**
**D-70329 Stuttgart (DE)**

(56) Entgegenhaltungen:
EP-A- 0 474 401    EP-A- 0 579 960
EP-A- 0 719 966    DE-A- 19 524 914
US-A- 4 893 526

• **EGGERT U: "CVT-GETRIEBE: ELEKTRONISCHE REGELUNG UND FAHRDYNAMIK" 1.März 1992 , VDI Z, VOL. 134, NR. SPECIAL, PAGE(S) 26, 29 - 30, 33 - 36, 39 - 40, 43, 46, 49 XP000297806 in der Anmeldung erwähnt siehe Seite 30, Spalte 2 - Seite 34, Spalte 2, Absatz 1**

**Beschreibung**

Stand der Technik

Die Erfindung geht aus von einem Verfahren beziehungsweise einer Vorrichtung zur Steuerung des Antriebsstranges mit den Merkmalen der Oberbegriffe der unabhängigen Ansprüche.

Bei Kraftfahrzeugen mit Verbrennungsmotoren wird der Drehzahlund Drehmomentbereich des Motors durch ein Getriebe und gegebenenfalls einen Drehmomentwandler (hydrodynamischer Drehmomentenwandler mit/ohne Überbrückungskupplung oder eine Trockenreibungskupplung) auf den Drehzahl- und Drehmomentbereich an den Rädern abgebildet. Dabei kann ein Getriebeausgangsmoment bei einer gegebenen Getriebeausgangsdrehzahl mit verschiedenen Getriebeübersetzungen realisiert werden.

In der US 4,893,526 wird aus der Fahrzeuglängsgeschwindigkeit und der Stellung des vom Fahrer betätigten Fahrpedals ein Sollwert für das Getriebeausgangsmoment bestimmt. Bei solchen sogenannten E-Gas-Systemen gibt der Fahrer des Fahrzeugs mittels des Fahrpedals nicht direkt das Motorausgangsmoment, beispielsweise durch eine direkte Kopplung des Fahrpedals mit der Drosselklape, vor, sondern er bestimmt mit der Fahrpedalstellung ein Vortriebsmoment an den Rädern beziehungsweise ein Getriebeausgangsmoment vor. Abhängig von diesem Sollausgangsmoment und der Fahrzeugslängsgeschwindigkeit wird ein Sollwert für die Motordrehzahl ermittelt. Dieser Sollwert für die Motordrehzahl wird durch die Verstellung eines kontinuierlich verstellbaren Fahrzeuggetriebes eingestellt. Darüber hinaus wird das Sollausgangsmoment sowie die eingestellte Getriebeübersetzung zur Einstellung des Motormoments herangezogen. Statt eines E-Gas-Systems kann auch alternativ ein anderes System zur Motorleistungssteuerung wie beispielsweise eine elektronische Dieseleinspritzsteuerung (EDC, Electronic Diesel Control) vorgesehen sein.

In dem Artikel VDI-Zeitschrift, Spezial "Antriebstechnik", NR. 134, März 1992, S. 26 - 49 wird beschrieben, eine gewünschte Motordrehzahl abhängig vom Drosselklappenwinkel des Fahrzeugmotors zu ermitteln. Diese gewünschte Motordrehzahl wird durch eine Verstellung eines kontinuierlich verstellbaren Getriebes eingestellt. Darüber hinaus wird in diesem Artikel beschrieben, die gewünschte Motordrehzahl auch abhängig von unterschiedlichen Fahrprogrammen zu wählen. Solche Fahrprogramme tragen der Fahrereigenschaft Rechung, wobei die Fahrereigenschaft durch einen eher verbrauchsoptimierten oder einen eher fahrleistungsorientierten Fahrstil des Fahrers repräsentiert wird.

Für Fahrzeugantriebe mit einer Antriebseinheit mit einem E-Gas oder einer anderen Motorleistungssteuerung, einem Drehmomentwandler und einem Getriebe (Automatikstufengetriebe, automatisiertes Schaltgetriebe, stufenloses Getriebe) ist es also die Aufgabe der Antriebsstrangsteuerung, den Arbeitspunkt des Antriebsstrangs so einzustellen, daß das gewünschte Moment am Getriebeausgang zur Verfügung steht. Die Arbeitspunkte des Antriebsstranges sind dabei gekennzeichnet durch die Motordrehzahl, das Motorausgangsmoment, die Drehzahlübersetzung des Getriebes, das Drehzahlverhältnis und den Zustand des Drehmomentwandlers.

Bei der Ermittlung des Arbeitspunktes sind der Gesamtwirkungsgrad des Triebstrangs, die Momentenreserve am Getriebeausgang sowie Emissionsgesichtspunkte zu berücksichtigen.

Der Arbeitspunkt des Antriebsstrangs wird in heutigen Steuerungsarchitekturen durch die Wahl der Getriebeübersetzung durch eine Getriebesteuerung oder eine Antriebsstrangsteuerung bestimmt. Die Ermittlung der Soll-Übersetzung erfolgt dabei mittels Schaltkennlinien. Ausgehend von der aktuellen Übersetzung wird dabei unter Berücksichtigung der Getriebeausgangsdrehzahl und der Drosselklappenstellung (in momentengeführten Systemen wie bei dem o.g. E-Gas-Systemen unter Berücksichtigung des gewünschten Getriebeausgangsmoments) eine neue Soll-Übersetzung ermittelt. Die Schaltkennlinien werden dazu für eine bestimmte Motor- Getriebekombination geeignet appliziert. Dadurch liegt der Arbeitspunkt des Antriebsstrangs für die Realisierung eines Getriebeausgangsmomentes bei einer gegebenen Getriebeausgangsdrehzahl fest.

In sogenannten adaptiven Getriebesteuerungen kann dieser Arbeitspunkt fahrertypabhängig und/oder fahrsituationsabhängig verschoben werden, indem für verschiedene Fahrertypen und/oder Fahrsituationen unterschiedliche Schaltkennlinien herangezogen werden. Dadurch kann der Arbeitspunkt insbesondere so gewählt werden, daß fahrertypspezifische Momentenreserven am Getriebeausgang zur Verfügung stehen. Hierzu sei beispielhaft auf die US 5,157,609, die US 5,025,684, ATZ Automobiltechnische Zeitschrift 94 (1992) 9, Seiten 428, fortfolgende und ATZ Automobiltechnische Zeitschrift 95 (1993) 9, Seiten 420ff verwiesen.

Bei CVT-Getrieben erfolgt die Ermittlung der Soll-Übersetzung entsprechend durch ein Kennfeld, dessen Eingangsgrößen die Drosselklappenstellung und die Getriebeausgangsdrehzahl sind.

Solche bekannte Verfahren zur Steuerung des Antriebsstrangs sind also dadurch gekennzeichnet, daß

- bei der Bestimmung des Arbeitspunktes des Antriebsstrangs durch die Übersetzungsermittlung mittels Schaltkennlinien andere Kriterien als eine fahrertypspezifische Momentenreserve nicht systematisch berücksichtigt werden,

- für eine bestimmte Motor-/Getriebekombination eine Applikation der Schaltkennlinien erforderlich ist, die sowohl motor- als auch getriebespezifische Eigenschaften berücksichtigt,
- vom Normalbetrieb abweichende Betriebsbedingungen von Motor und Getriebe bei der Übersetzungsermittlung durch Schaltkennlinien nicht systematisch berücksichtigt werden.

Weiterhin ist aus der Gattungsgemäßen EP 0 719 966 A1 ein System zur Steuerung eines Antriebsstrangs bekannt, bei dem in Abhängigkeit von verschiedenen Parametern und einem Optimierungsprozess ein Gangwechsel durchgeführt wird. Zunächst wird unter Berücksichtigung des Geschwindigkeitsverlustes beim Gangwechsel ein prognostizierter Wert für diejenige Motordrehzahl berechnet, die sich nach einem Gangwechsel einstellen würde. Dieser prognostizierte Wert wird wiederum verwandt, um die bei einem Gangwechsel zu erwartende Getriebeausgangsleistung durch Multiplikation mit einem Faktor aus der aktuellen Leistung zu berechnen. Die so prognostizierten Werte werden für verschiedene Gänge in ein Diagramm übertragen. Aus dem Diagramm wird ein Wert für eine Ausgangsdrehzahl ermittelt, der zur Auffindung eines optimalen Ganges mittels Fuzzy-Logik verwandt wird. Der vom Fahrer vorgegebene Sollwert für das Getriebeabtriebsmoment wird nur zeitverzögert im Anschluß an den eigentlichen Optimierungsprozess der Gangauswahl berücksichtigt.

Aus der EP 0 579 960 A1 ist eine Einrichtung zur Einstellung eines Getriebe-Abtriebsmomentes bei Fahrzeugen bekannt, bei dem Mittel zur Vorgabe eines Sollwertes für das Abtriebsmoment als Funktion der Stellung des Fahrpedals und der Fahrzeuggeschwindigkeit und Mitteln zur Berechnung eines Sollwertes für das Motormoment der Brennkraftmaschine aus dem vom Fahrer vorgegebenen Wert für das Abtriebsmoment und aus dem Istwert der Getriebeübersetzung vorgesehen sind. Hierbei wird ein Kennfeld oder ein Berechnungsablauf verwandt, in dem Werte für die Getriebeübersetzung als Funktion der Abtriebsdrehzahl und der Stellung des Fahrpedals abgespeichert sind oder berechnet werden.

Die Aufgabe der vorliegenden Erfindung besteht in der optimalen Einstellung des Antriebsstrangs. Diese Aufgabe wird durch die kennzeichnenden Merkmale der unabhängigen Ansprüche gelöst.

Vorteile der Erfindung

Wie schon erwähnt geht die Erfindung aus von einer Steuerung des Antriebsstrangs eines Kraftfahrzeugs mit wenigstens einer ein einstellbares Ausgangsmoment und eine Ausgangsdrehzahl aufweisenden Antriebseinheit. Zwischen der Antriebseinheit und den Rädern des Kraftfahrzeugs ist ein Getriebe angeordnet, das ein Ausgangsmoment aufweist und dessen Drehzahlübersetzung einstellbar ist. Während des Fahrbetriebs wird ein Sollwert für das Antriebsmoment des Fahrzeugs beziehungsweise für das Getriebeausgangsmoment vorgegeben, wobei diese Vorgabe insbesondere abhängig von der erfaßten Stellung eines von dem Fahrer des Kraftfahrzeugs betätigbaren Fahrpedals ist. Die unterschiedlichen Betriebspunkte des Antriebsstranges sind durch wenigstens unterschiedliche Ausgangsmomente der Antriebseinheit und Drehzahlübersetzungen und/oder unterschiedliche Ausgangsdrehzahlen der Antriebseinheit gekennzeichnet.

Der Kern der Erfindung besteht darin, daß fortlaufend während des Fahrbetriebes für mögliche Betriebspunkte jeweils ein Satz von Bewertungsgrößen ermittelt wird. Durch ein Optimierungsverfahren wird dann basierend auf den ermittelten Bewertungsgrößen einer der möglichen Betriebspunkte als optimaler Betriebspunkt ausgewählt. Die zu diesem ausgewählten optimalen Betriebspunkt gehörende Getriebeübersetzung wird dann am Getriebe eingestellt. Alternativ zur Einstellung der Getriebeübersetzung kann selbstverständlich auch die zu dem ausgewählten Betriebspunkt gehörende Ausgangsdrehzahl der Antriebseinheit durch eine Änderung der Getriebeübersetzung eingestellt werden.

Die Erfindung hat den Vorteil, daß ein Arbeitspunkt des Antriebsstrangs ermittelt wird, für den der Fahrerwunsch (Sollwert für das Getriebeausgangsmoment) bei gegebener Getriebeausgangsdrehzahl unter Berücksichtigung mehrerer Kriterien optimal realisiert werden kann.

In einer vorteilhaften Ausgestaltung der Erfindung ist vorgesehen, daß das Optimierungverfahren derart durchgeführt wird, daß die zu einem Satz gehörenden Bewertungsgrößen verknüpft werden. Zur Auswahl des optimalen Betriebspunkts wird dann der Betriebspunkt herangezogen, bei dem das Verknüpfungsergebnis einen Extremwert einnimmt. Hierbei kann insbesondere vorgesehen sein, daß die zu einem Satz gehörenden Bewertungsgrößen gewichtet werden und die gewichteten Bewertungsgrößen zu dem Verknüpfungsergebnis verknüpft werden.

Die Verknüpfung kann derart durchgeführt werden, daß die zu einem Satz gehörenden Bewertungsgrößen zu einer gewichteten Summe verknüpft werden. Zur Auswahl des optimalen Betriebspunkts wird dann der Betriebspunkt herangezogen, bei dem die gewichtete Summe einen Extremwert einnimmt.

Es kann weiterhin vorteilhaft vorgesehen sein, daß eine das Fahrverhalten des Fahrers des Kraftfahrzeugs, eine die momentane Fahrsituation des Kraftfahrzeugs und/oder eine die momentanen auf das Kraftfahrzeugs einwirkenden Umgebungseinflüsse repräsentierende Größe ermittelt wird. Wenigstens eine dieser ermittelten Größen wird dann bei der Ermittlung der Bewertungsgrößen und/oder bei der Auswahl des optimalen Betriebspunktes berücksichtigt. Die in den vorhergehenden Absätzen erwähnte Gewichtung der Bewertungsgrößen kann dann wenigstens abhängig von einer dieser ermittelten Größen (Fahrverhalten, momentane Fahrsituation und/oder die momentanen auf das Kraftfahrzeugs einwirkenden Umgebungseinflüsse) getätigt werden.

Besonders vorteilhaft ist es, daß als Bewertungsgrößen wenigstens

- ein erster Wert, der die Reserve des Getriebeausgangsmoments repräsentiert, und/oder
- ein zweiter Wert, der den Gesamtwirkungsgrad des Antriebsstrangs des Fahrzeugs repräsentiert, und/oder
- ein dritter Wert, der das Emissionsverhalten unterschiedlicher Schadstoffkomponenten repräsentiert, und/oder
- ein vierter Wert, der die Schallemission repräsentiert, ermittelt werden.

Die Erfindung sieht eine spezielle Formulierung des Optimierungsproblems durch eine Zielfunktion und eine Kostenfunktion vor, so daß sowohl die einzelnen Terme des Optimierungsproblems als auch die Gewichtungsfaktoren entsprechend dem Fahrertyp und der Fahrsituation adaptiert werden.

Eine Berechnungsvorschrift zur Lösung des Optimierungsproblems besteht darin, daß durch ein eindimensionales Suchverfahren eine Näherungslösung des Optimierungsproblems ermittelt wird und daraus ein Vorschlag für einen optimalen Arbeitspunkt des Triebstrangs abgeleitet wird.

Aus dem Vorschlag für einen optimalen Arbeitspunkt des Triebstrangs werden durch die koordinierte Antriebsstrangsteuerung Vorgaben für das Motorausgangsmoment und die Getriebeübersetzung geeignet ermittelt.

Weitere vorteilhafte Ausgestaltungen der Erfindung sind den Unteransprüchen zu entnehmen.

Zeichnung

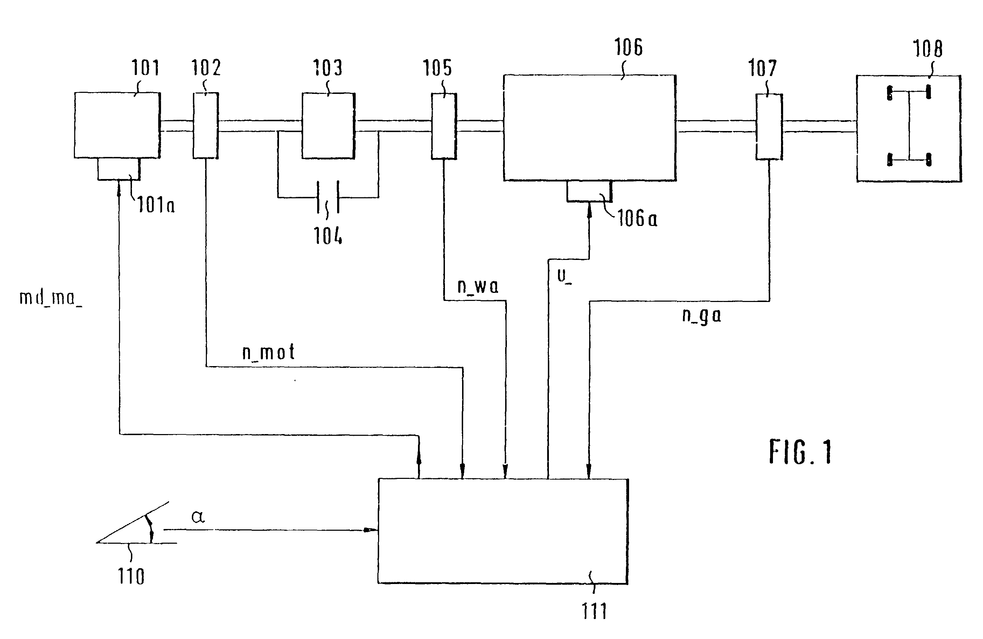

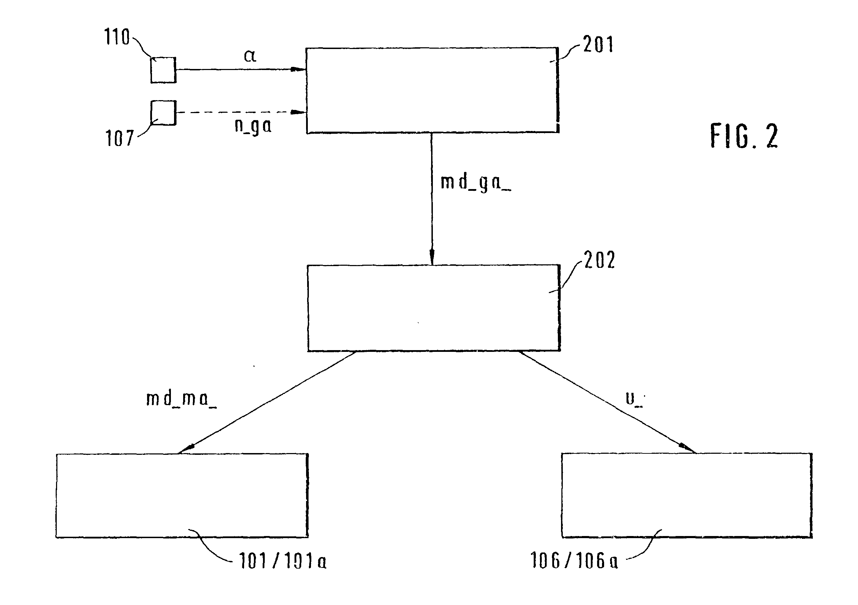

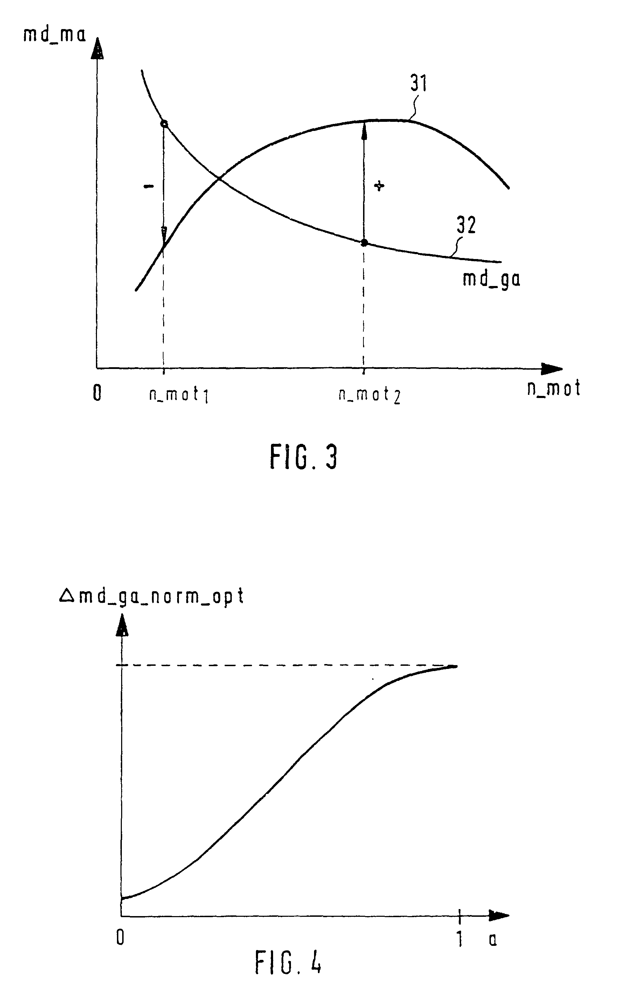

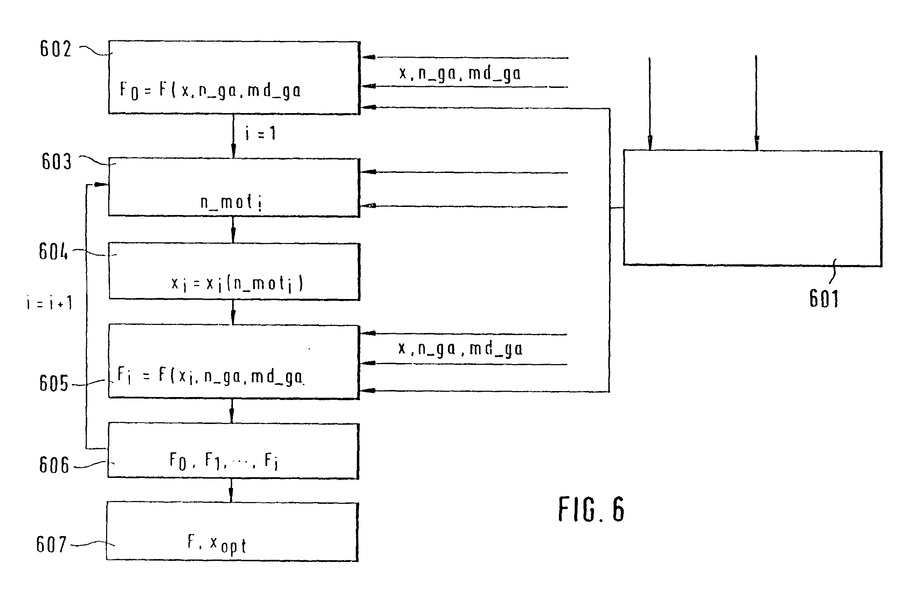

Die Figuren 1 und 2 zeigen Übersichtsblockschaltbilder einer koordinierten Antriebsstrangsteuerung, während die Figuren 3, 4 und 5 zur Erläuterung der Ermittlung verschiedener Bewertungsgrößen dienen. Die Figur 6 stellt schematisch den Verlauf die Berechnungsvorschrift zur Lösung des Optimierungsproblems dar.

Ausführungsbeispiel

Die Erfindung soll anhand des im folgenden zu beschreibenden Ausführungsbeispiels erläutert werden.

Die Figur 1 zeigt mit dem Bezugszeichen 101 den Fahrzeugmotor mit der entsprechenden Motorsteuerung 101a. Die Ausgangswelle des Motors ist über den hydrodynamischen Drehmomentenwandler 103 mit dem Eingang des Getriebes 106 verbunden. Der Wandler 103 kann durch die Wandlerüberbrückungskupplung 104 überbrückt werden.

Wie schon in der Beschreibungseinleitung erwähnt kann statt des hydrodynamischen Drehmomentwandlers 103 und der Überbrückungskupplung 104 auch eine konventionelle Trockenreibungskupplung vorgesehen sein. In diesem Ausführungsbeispiel soll im weiteren von einem hydrodynamischen Drehmomentenwandler mit einer Wandlerüberbrückungskupplung ausgegangen werden.

Die Übersetzung des Getriebes 106 kann durch die Getriebesteuerung 106a verändert werden. Die Motordrehzahl $n\_mot$ beziehungsweise die Wandlereingangsdrehzahl $n\_we$ wird durch den Drehzahlsensor 102 erfaßt, während die Getriebeeingangsdrehzahl beziehungsweise Wandlerausgangsdrehzahl $n\_wa$ durch den Sensor 105 und die Getriebeausgangsdrehzahl $n\_ga$ durch den Sensor 107 gemessen wird. Ausgangsseitig ist das Getriebe 106 mit den Antriebsrädern 108 verbunden.

Die koordinierte Antriebsstrangsteuerung 111 emfängt neben der Motordrehzahl $n\_mot$ und der Getriebeausgangsdrehzahl $n\_ga$ die Stellung $\alpha$ des Fahrpedals 110. Ausgangsseitig der koordinierten Antriebsstrangsteuerung 111 liegt das Sollmoment $md\_ma\_soll$ für den Motor 101 und die Sollübersetzung $u\_soll$ für das Getriebe an. Diese Sollgrößen werden an die Motorsteuerung 101a und die Getriebesteuerung 106a geleitet.

Die Figur 2 zeigt schematisch den Aufbau der koordinierten Antriebsstrangsteuerung 111. Im Block 201 wird aus der Stellung $\alpha$ des Fahrpedals, gegebenenfalls unter Berücksichtigung der Fahrzeuggeschwindigkeit (Getriebeausgangsdrehzahl $n\_ga$), der Sollwert $md\_ga\_soll$ für das Getriebeausgangsmoment $md\_ga$ bestimmt. In der noch zu beschreibenden Einheit 202 werden hieraus die Sollwerte für das Motormoment ($md\_ma\_soll$) und für die Getriebeübersetzung ($u\_soll$) ermittelt.

Im folgenden ersten Abschnitt wird die Formulierung des erfindungsgemäßen Optimierungsproblems dargestellt, um in einem zweiten Abschnitt die erfindungsgemäße Berechnungsvorschrift zur Lösung des Optimierungsproblems anzugeben. Die Einbettung des Optimierungsverfahrens in eine koordinierte Antriebsstrangsteuerung wird im dritten Abschnitt skizziert.

1. Formulierung des Optimierungsproblems:

Das Optimierungsproblem wird durch eine Zielfunktion und eine Kostenfunktion beschrieben. Die zu maximierende Zielfunktion ist

$$G = \gamma_{Moment} G_{Moment} + \gamma_{eta} G_{eta} \rightarrow \max ;$$

dabei bewertet die Größe $G_{Moment}$ die Momentenreserve am Getriebeausgang und $G_{eta}$ den Gesamtwirkungsgrad des Antriebsstrangs. Die zu minimierende Kostenfunktion wird wie folgt definiert:

$$L = \sum_{i=1}^{i\_Em} \lambda_{Emission,i} L_{Emission,i} + \lambda_{Geräusch} L_{Geräusch} \rightarrow \min ;$$

dabei werden $i\_Em$ Schadstoffkomponenten im Abgas additiv berücksichtigt. Die Größe $L_{Geräusch}$ beschreibt die Schallemission des gesamten Triebstrangs, die aus dem Betriebszustand des Antriebsstrangs ermittelt wird.

Aus der Aufgabe der gleichzeitigen Maximierung von $G$ und der Minimierung von $L$ wird das Optimierungsproblem wie folgt formuliert:

$$F = G - L \rightarrow max.$$

Dabei gelten für die Motordrehzahl $n\_mot$ die expliziten Restriktionen:

$$n\_mot \geq n\_mot\_min,$$

$$n\_mot \leq n\_mot\_max ,$$

wobei die Werte $n\_mot\_min$ und $n\_mot\_max$ die minimal und maximal zulässigen Motordrehzahlen sind. Da die Getriebeübersetzung nur in bestimmten Grenzen verstellt werden kann und die Fahrzeuggeschwindigkeit konstant bleiben soll, ergeben sich für die Getriebeübersetzung u und die Getriebeausgangsdrehzahl $n\_ga$ die impliziten Restriktionen

$$u\_min \leq u \leq u\_max ,$$

$$n\_ga = const .$$

Die Gewichtungsfaktoren $\gamma_{Moment}$ , $\gamma_{eta}$ sowie $\lambda_{Emissionn,i}$ und $\lambda_{Geräusch}$ werden unter Berücksichtigung des Fahrertyps und der Fahrsituation adaptiv festgelegt. So erhält für einen ökonomischen Fahrer die Größe $G_{eta}$ besonderes Gewicht, indem der Gewichtungsfaktor $\gamma_{eta}$ entsprechend gewählt wird. Bei Stadtfahrten werden Emissionsgesichtspunkte, die durch die Größen $L_{Emission,i}$ quantifiziert werden, verstärkt berücksichtigt, indem die Gewichtungsfaktoren $\lambda_{Emissionn,i}$ entsprechend gewählt werden. Ist beispielsweise die Fahrsituation "slow and go" in einer verkehrsberuhigten Zone erkannt, so findet der Term $L_{Geräusch}$ durch geeignete Wahl von $\lambda_{Geräusch}$ besondere Berücksichtigung. Weiterhin werden auch bei der Berechnung der Terme $G_{Moment}$ , $G_{eta}$ , $L_{Emission,i}$ und $L_{Geräusch}$ Fahrertyp und Fahrsituation in applizierbarer Weise berücksichtigt. Die Berechnungsvorschriften für die Größen $G_{Moment}$ , $G_{eta}$ , $L_{Emission,i}$ und $L_{Geräusch}$ werden im folgenden beschrieben.

Die Ermittlung einer den Fahrertyp repräsentierenden Größe $a_{Fahrer}$ beziehungsweise von Größen, die die momentan vorliegende Fahrsituation beschreiben, ist in dem eingangs aufgeführten Stand der Technik detailliert beschrieben.

1.1 Berechnungsvorschrift für $G_{Moment}$ :

Die Größe $G_{Moment}$ bewertet die Momentenreserve $\Delta md\_ga,$ die bei einem geforderten Getriebeausgangsmoment $md\_ga\_soll$ (Block 201, Fig.2, Verlauf 32 in der Fig.3) bei gegebener Getriebeausgangsdrehzahl $n\_ga$ für ein Wertepaar ($u, n\_mot$) aus Getriebeübersetzung und Motordrehzahl am Getriebeausgang zur Verfügung steht. Die Größe $G_{Moment}$ wird wie folgt berechnet:

1.1.1 Berechnung der Momentenübersetzung $mue\_ges$ des Antriebsstrangs:

Die Momentenübersetzung $mue\_ges$ des Antriebsstrangs ergibt sich als Funktion der Getriebeübersetzung $u$, der Motordrehzahl $n\_mot$, des momentanen Drehzahlverhältnisses $\nu_{Wandler}$ des hydrodynamischen Drehmomentwandlers 103 und dem Zustand $Z_{Wandler}$ der Wandlerüberbrückungskupplung 104:

$$mue\_ges = mue\_ges(u,n\_mot,n\_ga,\nu_{Wandler},Z_{Wandler})$$

$$= mue\_wandler(n\_mot,u{\cdot}n\_ga,\nu_{Wandler},Z_{Wandler}) \cdot mue\_getriebe(u,n\_ga)$$

Im Falle der Verwendung einer Trockenreibkupplung statt des hydrodynamischen Drehmomentwandlers 103 beschreibt die Größe $\nu_{Wandler}$ ebenfalls das Drehzahlverhältnis an der Kupplung, der Zustand $Z_{Wandler}$ gibt in diesem Fall den Zustand (offen, schleifend, geschlossen) der Trockenreibkupplung an. Der Zustand "schleifend" kann sowohl im Falle einer Wandlerüberbrückungskupplung als auch im Falle einer Trockenreibkupplung auch numerisch durch das übertragene Moment beschrieben werden.

1.1.2 Berechnung des am Motorausgang für die Motordrehzahl $n\_mot$ maximal bereitstellbaren Moments:

Das am Motorausgang für die Motordrehzahl $n\_mot$ maximal bereitstellbaren Moment $md\_ma\_max\_n$ ergibt sich zu:

$$md\_ma\_max\_n = md\_ma\_max\,(n\_mot).$$

Der Verlauf dieser sogenannten Vollastlinie ist mit dem Verlauf 31 in der Figur 3 beispielhaft zu sehen. Bei der Berechnung werden die aktuellen Betriebsbedingungen des Motors wie z.B. Motortemperatur und Umgebungseinflüsse (z.B. Luftdichteänderungen bei einer Fahrt in großer Höhe) sowie die Randbedingungen, unter denen das Moment realisiert wird, berücksichtigt. Randbedingung ist z.B. eine erlaubte oder nicht zugelassene Vollastanreicherung des Motors.

1.1.3 Berechnung des maximal bereitstellbaren Moments $md\_ga\_max\_n$ am Getriebeausgang für die berechnete Momentenübersetzung $mue\_ges$:

Das bei einer bestimmten Motordrehzahl $n\_mot$ maximal bereitstellbare Moment $md\_ga\_max\_n$ am Getriebeausgang für die berechnete Momentenübersetzung $mue\_ges$ ergibt somit zu:

$$md\_ga\_max\_n=md\_ma\_max\_n{\cdot}mue\_ges$$

1.1.4 Berechnung der Momentenreserve $\Delta md\_ga$ am Getriebeausgang:

Die Momentenreserve $\Delta md\_ga$ am Getriebeausgang ergibt sich somit zu:

$$\Delta md\_ga = md\_ga\_max\_n - md\_ga\_soll.$$

1.1.5 Normierung der Momentenreserve:

Zur Normierung der Momentenreserve wird die Größe $\Delta md\_ga$ in Relation gesetzt zur maximal möglichen Momentenreserve $\Delta md\_ga\_pot$, die bei der momentane Getriebeausgangsdrehzahl $n\_ga$ und dem geforderten Getriebeausgangsmoment *md_ga_soll* möglich ist. Der Motor erzielt bei der Drehzahl *n_pot* die maximale Ausgangsleistung und stellt dabei am Motorausgang das Moment *md_ma_pot* zur Verfügung. Für die Getriebeausgangsdrehzahl *n_ga* wird das maximal mögliche Getriebeausgangsmoment *md_ga_pot* ermittelt zu:

$$md\_ga\_pot = md\_ma\_pot \cdot mue\_get\left(u = \frac{n\_pot}{n\_ga}, n\_ga\right)$$

Eine mögliche Wandlerverstärkung wird dabei zu *mue_wandler* = 1 angenommen. Die maximal mögliche Momentenreserve wird dann bestimmt zu:

$$\Delta md\_ga\_pot = md\_ga\_pot - md\_ga\_soll$$

Die normierte Momentenreserve am Getriebeausgang wird damit bestimmt zu:

$$\Delta md\_ga\_norm = \frac{\Delta ma\_ga}{\Delta md\_ga\_pot}.$$

Für *n_mot* = *n_pot* ist $\Delta md\_ga\_norm$=1; für eine verschwindende Momentenreserve ist $\Delta md\_ga\_norm$=0. Kann das geforderte Getriebeausgangsmoment bei der Motordrehzahl *n_mot* nicht eingestellt werden, ergibt sich ein negativer Wert für $\Delta md\_ga\_norm$ .

Beispielhaft sind in der Figur 3 zwei Situationen für Motordrehzahlen $n\_mot_1$ und $n\_mot_2$ dargestellt. Für die Motordrehzahl $n\_mot_1$ ergibt sich ein negativer Wert für die normierte Momentenreserve am Getriebeausgang, angedeutet durch einen negativen gerichteten Pfeil. Für die Motordrehzahl $n\_mot_2$ ergibt sich ein positiver Wert für die normierte Momentenreserve am Getriebeausgang, angedeutet durch einen positiven gerichteten Pfeil.

1.1.6 Fahrertypspezifische Bestimmung der gewünschten normierten Momentenreserve $\Delta md\_ga\_norm\_opt$ :

Zur fahrertypspezifischen Bestimmung der gewünschten normierten Momentenreserve $\Delta md\_ga\_norm\_opt$ wird der Fahrertyp durch die Größe $a_{Fahrer}$ beschrieben, wobei $0 \leq a_{Fahrer} \leq 1$. Der Größe $a_{Fahrer}$ wird durch eine Funktion $m_{Moment}(a_{Fahrer})$ eine gewünschte normierte Momentenreserve $\Delta md\_ga\_norm\_opt$ zugeordnet:

$$\Delta md\_ga\_norm\_opt = m_{Moment}(a_{Fahrer})$$

Ein möglicher Verlauf der Funktion $m_{Moment}(a_{Fahrer})$ ist in der Figur 4 dargestellt.

1.1.7 Bestimmung der Größe $G_{Moment}$ aus der normierten Momentenreserve $\Delta md\_ga\_norm$ und der gewünschten normierten Momentenreserve $\Delta md\_ga\_norm\_opt$ :

Die Größe $G_{Moment}$ soll einen maximalen Beitrag zur Zielfunktion *G* liefern, wenn die normierte Momentenreserve mit der normierten gewünschten Momentenreserve übereinstimmt. Dieser maximale Beitrag wird zu 1 skaliert. Bei verschwindender Momentenreserve soll der Beitrag 0 sein, bei negativer normierter Momentenreserve soll ein hoher negativer Strafbeitrag erfolgen. Die Größe $G_{Moment}$ wird dazu mittels einer Funktion

$$g_{Moment}(\Delta md\_ga\_norm, \Delta md\_ga\_norm\_opt)$$

ermittelt:

$$G_{Moment} = g_{Moment}(\Delta md\_ga\_norm, \Delta md\_ga\_norm\_opt).$$

Ein typischer Verlauf der Funktion

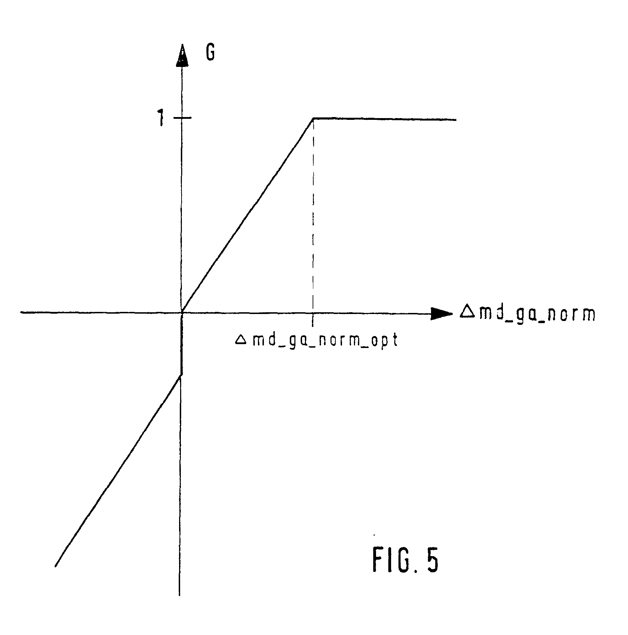

$g_{Moment}(\Delta md\_ga\_norm, \Delta md\_ga\_norm\_opt)$ ist in der Figur 5 dargestellt.

Somit ist die Bewertungsgröße $G_{Moment}$ für die Momentenreserve bestimmt.

1.2 Berechnungsvorschrift für $G_{eta}$

Die Größe $G_{eta}$ beschreibt den Gesamtwirkungsgrad des Antriebsstrangs und bewegt sich im Intervall [0, 1].
Erreichen die Komponenten Motor 101, Wandler 103 und Getriebe 106 gleichzeitig ihren absoluten optimalen Wirkungsgrad, so ist $G_{eta}$ =1. Zur Bestimmung von $G_{eta}$ werden die erforderlichen Größen zur Kennzeichnung des Wirkungsgrades von Motor 101, Wandler 103 und Getriebe 106 wie folgt berechnet:

1.2.1 Berechnung der Größe $G_{M,eta}$ zur Beschreibung des Motor-Wirkungsgrades:

Die Größe $G_{M,eta}$ zur Beschreibung des Motor-Wirkungsgrades ergibt sich zu:

$$G_{M,eta} = \frac{b_e^{min}(md\_ma \cdot n\_mot)}{b_e(md\_ma, n\_mot)}.$$

Dabei ist $b_e(md\_ma, n\_mot)$ der spezifische Kraftstoffverbrauch beim Motorausgangsmoment $md\_ma$ und der Motordrehzahl $n\_mot$. Der minimal mögliche spezifische Kraftstoffverbrauch, mit dem die Motorausgangsleistung $md\_ma \cdot n\_mot$ realisiert werden kann, ist $b_e^{min}(md\_ma \cdot n\_mot)$.
Die Größe $G_{M,eta}$ wird 1, wenn der Motor an dem für die geforderte Motorleistung verbrauchsgünstigsten Betriebspunkt arbeitet und wird für ungünstige Betriebspunkte kleiner. Die Größe $G_{M,eta}$ bewegt sich somit im Intervall [0, 1].

1.2.2 Berechnung der Größe $G_{G,eta}$ zur Beschreibung des Getriebe-Wirkungsgrades:

Die Größe $G_{G,eta}$ zur Beschreibung des Getriebe-Wirkungsgrades ergibt sich zu:

$$G_{G,eta} = \frac{\eta_G(u, n\_ga, md\_ga)}{\eta_G^{max}}.$$

Dabei ist $\eta_G(u, n\_ga, md\_ga)$ der Wirkungsgrad, mit dem das Getriebe das Ausgangsmoment $md\_ga$ bei einer Drehzahlübersetzung von $u$ und einer Ausgangsdrehzahl von $n\_ga$ abgibt. Der maximale Wirkungsgrad des Getriebes über den gesamten Betriebsbereich ist $\eta_G^{max}$. Die Größe $G_{M,eta}$ bewegt sich im Intervall [0, 1].

1.2.3 Berechnung der Größe $G_{W,eta}$ zur Beschreibung des Wirkungsgrades des Drehmomentwandlers:

Die Größe $G_{W,eta}$ zur Beschreibung des Wirkungsgrades des Drehmomentwandlers ergibt sich zu:

$$G_{W,eta} = \eta_{Wandler}(n\_mot, u \cdot n\_ga, \nu_{Wandler}, Z_{Wandler}).$$

Die Größe $G_{W,eta}$ bewegt sich ebenfalls im Intervall [0, 1].

1.2.4 Berechnung von $G_{eta}$ :

Die Bewertungsgröße $G_{eta}$ für den Gesamtwirkungsgrad des Antriebsstrangs ist dann:

$$G_{eta} = G_{M,eta} \cdot G_{G,eta} \cdot G_{W,eta} .$$

1.3 Berechnungsvorschrift für $L_{Emission,i}$

Die Größe $L_{Emission,i}$ beschreibt das Emissionsverhalten für die Schadstoffkomponente $i$. Relevante Schadstoffkomponenten, für die $L_{Emission,i}$ zu ermitteln ist , sind z.B. $NO_x$, CO und HC.
Die Ermittlung erfolgt nach folgender Berechnungsvorschrift:

1.3.1 Skalierung der spezifischen Emission für die Schadstoffkomponente $i$:

$$l_{Emission,i} = \frac{c_i(md\_ma,n\_mot)}{c_i^{min}(md\_ma \cdot n\_mot)}.$$

Dabei ist $c_i(md\_ma,n\_mot)$ die spezifische Emission (z.B. in g/kWh) für die Schadstoffkomponente $i$ beim Motorausgangsmoment $md\_ma$ und der Drehzahl $n\_mot$. Die minimal mögliche spezifische Emission, mit der die Motorausgangsleistung $md\_ma \cdot n\_mot$ realisiert werden kann, ist $c_i^{min}(md\_ma,n\_mot)$. Die Größe $l_{Emission,i}$ wird 1, wenn der Motor an dem für die geforderte Motorleistung und für die Schadstoffkomponente $i$ emissionsgünstigsten Betriebspunkt arbeitet und wird für ungünstige Betriebspunkte größer.

1.3.2 Berechnung von $L_{Emission,i}$ aus $l_{Emission,i}$ :

Zur Berechnung von $L_{Emission,i}$ aus $l_{Emission,i}$ sind wahlweise zwei applizierbare alternative Berechnungsmöglichkeiten heranzuziehen:

1.2.3.1 Lineare Gewichtung von $l_{Emission,i}$ :

$$L_{Emission,i} = l_{Emission,i}$$

1.2.3.2 Nichtlineare Gewichtung von $l_{Emission,i}$ mittels einer Barriere-Methode. Dabei wird das Überschreiten eines applizierbaren Grenzwertes $l_{Emission,i}^{grenz}$ durch einen besonders hohen Beitrag zur Größe $L_{Emission,i}$ bewertet, wobei Emissionswerte unterhalb des Grenzwertes keinen Beitrag liefern:

$$L_{Emission,i} = \left( \max \left\{ 0, l_{Emission,i} - l_{Emission,i}^{grenz} \right\} \right)^2$$

Damit ist die Bewertungsgröße $L_{Emission,i}$ für das Emissionsverhalten bezüglich der Schadstoffkomponente $i$ bestimmt.

1.4 Berechnungsvorschrift für $L_{Geräusch}$

Die Größe $L_{Geräusch}$ beschreibt das Schallemissionsverhalten des gesamten Anriebstrangs. Sie wird für den Arbeitspunkt des Antriebsstrangs aus Beschreibungsgrößen für die Schallemission des Motors 101 und des Getriebes 106 ermittelt zu:

$$L_{Geräusch} = l_{Geräusch}(L_{Geräusch,Motor}, L_{Geräusch,Getriebe})$$

2. Berechnungsvorschrift zur Lösung des Optimierungsproblems:

Durch die im folgenden beschriebene Rechenvorschrift wird eine Näherungslösung $\tilde{F}$ des obengenannten Optimierungsproblems bestimmt, für die das Getriebeausgangsmoment $md\_ga$ bei der gegebenen Getriebeausgangsdrehzahl $n\_ga$ so realisiert wird, daß

$$F = G - L = \max$$

ist. Diese Berechnungsvorschrift ist in der Figur 6 schematisch zu sehen.
Im Schritt 601 werden, wie schon beschrieben, die Gewichtungsfaktoren $\gamma_{Moment}$ , $\gamma_{eta}$ , $\lambda_{Emissionn,i}$ und

$\lambda_{Geräusch}$ bestimmt

Die Bestimmung der Näherungslösung $\widetilde{F}$ erfolgt durch Variation der unabhängigen Variablen $n\_mot$ durch ein eindimensionales Suchverfahren. Dazu wird folgende Rechenvorschrift angewendet:

2.1 Schritt 602:

Der Wert von $F$ wird für den aktuellen Arbeitspunkt **x** des Antriebsstrangs ermittelt. Der aktuelle Arbeitspunkt **x** wird durch

$$\mathbf{x} = \begin{pmatrix} n\_mot \\ md\_ma \\ u \\ v_{Wandler} \\ Z_{Wandler} \end{pmatrix}$$

beschrieben. Der zugehörige Wert von $F$ ist

$$F_0 = F(x, n\_ga, md\_ga\_soll).$$

Der Wert von $F$ wird für $I$ weitere, mögliche Arbeitspunkte $\mathbf{x}_i$ (i=1,...,$I$) des Antriebsstrangs ermittelt, für die das aktuelle Getriebeausgangsmoment $md\_ga$ bei der Getriebeausgangsdrehzahl $n\_ga$ realisiert werden kann. Diese Arbeitspunkte ergeben sich durch Variation der Motordrehzahl:

$$x_i = x_i(n\_mot_i), \ i = 1,..., I.$$

2.2 Schritt 603:

Die Drehzahlen $n\_mot_i$ werden nach folgender Berechnungsvorschrift bestimmt:

$$n\_mot_1 = s_1(n\_mot, F_0)$$

$$n\_mot_2 = s_2(n\_mot, n\_mot_1, F_0, F_1)$$

$$...$$

$$n\_mot_i = s_i(n\_mot,...,n\_mot_{i-1}, F_0,..., F_{i-1})$$

$$...$$

$$n\_mot_I = s_I(n\_mot,...,n\_mot_{I-1}, F_0,..., F_{I-1})$$

Bei der Ermittlung der Größen $n\_mot_i$ werden die obenbeschriebenen expliziten und impliziten Restriktionen des Optimierungsproblems berücksichtigt. Die Funktionen $s_i$ können dabei auch Wissen über die Antriebsstrangkomponenten enthalten, wie z.B. die diskreten Übersetzungsstufen bei Stufengetrieben. Die Anzahl $I$ der zu untersuchenden Arbeitspunkte kann dynamisch variiert werden.

2.3 Schritt 604:

Die Bestimmung der Arbeitspunkte

$$\mathbf{x}_i = \begin{pmatrix} n\_mot_i \\ md\_ma_i \\ u_i \\ v_{Wandler,i} \\ Z_{Wandler,i} \end{pmatrix}$$

erfolgt gemäß der folgenden Berechnungsvorschrift:

(i) Berechnung von

$$u_i = \frac{n\_mot_i}{n\_ga_i} \cdot v_{Wandler,i}$$

Dabei wird das Drehzahlverhältnis und der Zustand des Wandlers als unverändert angenommen:

$$v_{Wandler,i} = v_{Wandler}$$

$$Z_{Wandler,i} = Z_{Wandler}$$

(ii) Berechnung von

$$md\_ma_i = \frac{1}{mue\_ges(u_i, n\_mot_i, n\_ga, v_{Wandler,i}, Z_{Wandler,i})} \cdot md\_ga$$

wobei

$$md\_ga = mue\_ges(u, n\_mot, n\_ga, v_{Wandler}, Z_{Wandler}) \cdot md\_ma.$$

Die so ermittelten Arbeitspunkte $\mathbf{x}_i$ liegen auf der durch den Getriebewirkungsgrad korrigierten Leistungshyperbel im Motorkennfeld, auf der auch der Arbeitspunkt $\mathbf{x}$ liegt.

2.4 Schritt 605:

Die Ermittlung der Werte $F_i$ für die Arbeitspunkte $\mathbf{x}_i, i = 1,...,I$ geschieht gemäß der Rechenvorschrift:

$$F_i = F(x_i, n\_ga, md\_ga\_soll), \quad i = 1,...,I \, .$$

2.5 Schritte 606 und 607:

Die Näherungslösung $\tilde{F} = F_k$ ist durch den maximal erreichten Wert für $F$ über $F_0$ und alle $F_i$ gekennzeichnet:

$$F_k = \max_{j=0}^{I} F_j$$

Der zugehörige optimale Arbeitspunkt des Triebstrangs ist $\mathbf{x}_{opt} = \mathbf{x}_k$. Er wird bei der Motordrehzahl

**11**

$$n\_mot\_opt = n\_mot_k$$

erreicht.

3. Einbettung des Optimierungsverfahrens in eine koordinierte Antriebsstrangsteuerung:

Unter Berücksichtigung des durch die Lösung des Optimierungsproblems ermittelten Vorschlags für einen optimalen Arbeitspunkt $\mathbf{x}_{opt}$ des Antriebsstrangs werden durch eine koordinierte Antriebsstrangsteuerung Vorgaben für das Motorausgangsmoment $md\_ma\_soll$ und die Getriebeübersetzung $u\_soll$ ermittelt. Die schon beschriebene Figur 2 zeigt die Grundstruktur einer koordinierten Antriebsstrangsteuerung zur Realisierung des vom Fahrer geforderten Getriebeausgangsmomentes $md\_ga\_soll$.
Die Vorgaben für $md\_ma\_soll$ und $u\_soll$ werden aus dem im Schritt 607 ermittelten optimalen Arbeitspunkt $\mathbf{x}_{opt}$ des Antriebsstrangs bestimmt zu:

$$u\_soll = f(x_{opt})$$

$$md\_ma\_soll = \frac{1}{mue\_ges} \cdot md\_ga\_soll$$

Es wird also die Übersetzung u_soll am Getriebe eingestellt, die durch den optimalen Arbeitspunkt $\mathbf{x}_{opt}$ des Antriebsstrangs vorgegeben wird.
Die erfindungsgemäße Vorgehensweise bietet vorteilhafterweise die Möglichkeit, den Fahrerwunsch unter Berücksichtigung mehrerer Kriterien optimal realisieren zu können.
Die Kriterien werden dabei basierend auf physikalischen Größen für den Gesamtwirkungsgrad des Antriebsstrangs, die Momentenreserve am Getriebeausgang, sowie Schadstoff- und Schallemissionen systematisch berücksichtigt. Dadurch wird ein Arbeitspunkt des Triebstrangs ermittelt, der sowohl unterschiedlichen Fahrsituationen und Fahrertypen als auch Anforderungen an Schadstoff- und Schallemissionen gerecht wird. Die Gewichtung der relevanten Kriterien kann während des Fahrbetriebs adaptiv verändert werden.
Die Ermittlung des optimalen Arbeitspunktes erfolgt modellbasiert, ausgehend von physikalischen Beschreibungsgrößen für Motor- und Getriebeeigenschaften.
Eine Applikation von Kenngrößen, die von der speziellen Motor-Getriebekombination abhängig sind, ist somit nicht erforderlich.
Weiterhin werden dadurch vom Normalbetrieb abweichende Betriebsbedingungen von Motor und Getriebe bei der Ermittlung des optimalen Arbeitspunktes durch das erfindungsgemäße Verfahren systematisch berücksichtigt.

Übersicht über verwendete Bezeichnungen

| | |
|---|---|
| $md\_ma$ | Motorausgangsmoment |
| $md\_ma\_soll$ | Sollwert für das Motorausgangsmoment |
| $md\_ga$ | Getriebeausgangsmoment |
| $md\_ga\_soll$ | Sollwert für das Getriebeausgangsmoment |
| $D\ md\_ga$ | Momentenreserve am Getriebeausgang |
| $n\_ga$ | Getriebeausgangsdrehzahl |
| $n\_mot$ | Motordrehzahl |
| $n\_mot\_min$ | minimal zulässige Motordrehzahl |
| $n\_mot\_max$ | maximal zulässige Motordrehzahl |
| $u$ | Drehzahlübersetzung des Getriebes |
| $u\_min$ | minimal einstellbare Getriebeübersetzung |
| $u\_max$ | maximal einstellbare Getriebeübersetzung |
| $mue\_ges$ | Momentenübersetzung des Antriebsstrangs |
| $v_{Wandler}$ | Drehzahlverhältnis des (hydrodynamischen) Drehmomentwandlers |

$$v_{Wandler} = \frac{n\_wa}{n\_we},$$

mit

$n\_wa$: Wandlerausgangsdrehzahl

$n\_we$: Wandlereingangsdrehzahl

| | |
|---|---|
| $Z_{Wandler}$ | Zustand der Wandlerüberbrückungskupplung beziehungsweise der Kupplung |
| $\alpha$ | Stellung des Fahrpedals |
| $a_{Fahrer}$ | Größe zur Beschreibung des Fahrertyps |
| $\gamma_{Moment}$, $\gamma_{eta}$ | Gewichtungsfaktoren |
| $\lambda_{Emissionn,i}$, $\lambda_{Geräusch}$ | Gewichtungsfaktoren |
| $md\_ma\_max$ | maximal bereitstellbares Motormoment |
| $md\_ma\_max\_n$ | am Motorausgang für die Motordrehzahl $n\_mot$ maximal bereitstellbares Motormoment |
| $md\_ga\_max\_n$ | maximal bereitstellbaren Moment am Getriebeausgang für die Motordrehzahl $n\_mot$ |
| $G_{Moment}$ | Bewertungsgröße für die Momentenreserve |
| $G_{eta}$ | Bewertungsgröße für den Gesamtwirkungsgrad des Antriebsstrangs |
| $G_{M,eta}$ | Bewertungsgröße zur Beschreibung des Motor-Wirkungsgrades |
| $G_{G,eta}$ | Bewertungsgröße zur Beschreibung des Getriebe-Wirkungsgrades |
| $G_{W,eta}$ | Bewertungsgröße zur Beschreibung des Wirkungsgrades des Drehmomentwandlers |
| $L_{Emission,i}$ | Bewertungsgröße zur Beschreibung des Emissionsverhaltens für die Schadstoffkomponente i |
| $L_{Geräusch}$ | Bewertungsgrößezur Beschreibung des Schallemissionsverhaltens des gesamten Antriebsstrangs |
| **X** | aktueller Arbeitspunkt des Antriebsstrangs |

**Patentansprüche**

1. Verfahren zur Steuerung des Antriebsstrangs eines Kraftfahrzeugs mit wenigstens einer ein einstellbares Ausgangsmoment ($md\_ma$) und eine Ausgangsdrehzahl ($n\_mot$) aufweisenden Antriebseinheit und einem zwischen der Antriebseinheit und den Rädern des Kraftfahrzeugs angeordneten und ein Ausgangsmoment ($md\_ga$) aufweisendes Getriebe, dessen Drehzahlübersetzung ($u$) einstellbar ist, wobei ein Sollwert ($md\_ga\_soll$) für das Getriebeausgangsmoment, insbesondere abhängig von der erfaßten Stellung eines von dem Fahrer des Kraftfahrzeugs betätigbaren Fahrpedals, vorgegeben ist und unterschiedliche Betriebspunkte ($x_i$) des Antriebsstranges durch wenigstens unterschiedliche Ausgangsmomente ($md\_ma_i$) der Antriebseinheit und Drehzahlübersetzungen ($u_i$) und/oder unterschiedliche Ausgangsdrehzahlen ($n\_mot_i$) der Antriebseinheit **gekennzeichnet sind, dadurch gekennzeichnet,** daß während des Fahrbetriebes

   - für mögliche Betriebspunkte ($x_i$) jeweils ein Satz von Bewertungsgrößen ($G_{Moment}$, $G_{eta}$, $L_{Emission,i}$ $L_{Geräusch}$) ermittelt wird, und
   - **durch** ein Optimierungsverfahren die zu einem Satz gehörenden Bewertungsgrößen ($G_{Moment}$, $G_{eta}$, $L_{Emission,i}$ $L_{geräusch}$) verknüpft werden und zur Auswahl einer der möglichen Betriebspunkte als optimaler Betriebspunkt ($x_{opt}$) der Betriebspunkt herangezogen wird, bei dem das von dem vorgegebenen Sollwert ($md\_ga\_soll$) für das Getriebeausgangsmoment abhängige Verknüpfungsergebnis ($F$) einen Extremwert einnimmt, und
   - die zu dem ausgewählten Betriebspunkt ($x_{opt}$) gehörende Getriebeübersetzung ($u_{opt}$) und/oder die zu dem ausgewählten Betriebspunkt ($x_{opt}$) gehörende Ausgangsdrehzahl ($n\_mot$) der Antriebseinheit eingestellt wird.

2. Verfahren zur Steuerung des Antriebsstrangs eines Kraftfahrzeugs mit wenigstens einer ein einstellbares Ausgangsmoment ($md\_ma$) und eine Ausgangsdrehzahl ($n\_mot$) aufweisenden Antriebseinheit und einem zwischen der Antriebseinheit und den Rädern des Kraftfahrzeugs angeordneten und ein Ausgangsmoment ($md\_ga$) aufweisendes Getriebe, dessen Drehzahlübersetzung (u) einstellbar ist, wobei ein Sollwert ($md\_ga\_soll$) für das Getriebeausgangsmoment, insbesondere abhängig von der erfaßten Stellung eines von dem Fahrer des Kraftfahrzeugs betätigbaren Fahrpedals, vorgegeben ist und unterschiedliche Betriebspunkte ($x_i$) des Antriebsstranges durch wenigstens unterschiedliche Ausgangsmomente ($md\_ma_i$) der Antriebseinheit und Drehzahlübersetzungen ($u_i$) und/oder unterschiedliche Ausgangsdrehzahlen ($n\_mot_i$) der Antriebseinheit **gekennzeichnet sind, dadurch gekennzeichnet,** daß während des Fahrbetriebes

   - für mögliche Betriebspunkte ($x_i$) jeweils ein Satz von Bewertungsgrößen ($G_{Moment}$, $G_{eta}$, $L_{Emission,i}$, $L_{Geräusch}$) ermittelt wird, wobei als Bewertungsgrößen wenigstens

     - ein erster Wert ($G_{Moment}$), der die Reserve des Getriebeausgangsmoments repräsentiert, und/oder

- ein zweiter Wert ($G_{eta}$), der den Gesamtwirkungsgrad des Antriebsstranges des Fahrzeugs repräsentiert, und/oder
- ein dritter Wert ($L_{Emission,i}$), der das Emissionsverhalten unterschiedlicher Schadstoffkomponenten ($i$) repräsentiert, und/oder
- ein vierter Wert ($L_{Geräusch}$), der die Schallemission repräsentiert,

ermittelt werden, und
- **durch** ein Optimierungsverfahren basierend auf den ermittelten Bewertungsgrößen einer der möglichen Betriebspunkte als optimaler Betriebspunkt ($x_{opt}$) ausgewählt wird, und
- die zu dem ausgewählten Betriebspunkt ($x_{opt}$) gehörende Getriebeübersetzung ($u_{opt}$) und/oder die zu dem ausgewählten Betriebspunkt ($x_{opt}$) gehörende Ausgangsdrehzahl ($n\_mot$) der Antriebseinheit eingestellt wird.

3. Verfahren nach Anspruch 2, **dadurch gekennzeichnet, daß** das Optimierungverfahren derart durchgeführt wird, daß die zu einem Satz gehörenden Bewertungsgrößen ($G_{Moment}$, $G_{eta}$, $L_{Emission,i}$, $L_{geräusch}$) verknüpft werden und zur Auswahl des optimalen Betriebspunkts ($x_{opt}$) der Betriebspunkt herangezogen wird, bei dem das Verknüpfungsergebnis ($F$) einen Extremwert einnimmt.

4. Verfahren nach Anspruch 1 oder 3, **dadurch gekennzeichnet, daß** die zu einem Satz gehörenden Bewertungsgrößen ($G_{Moment}$, $G_{eta}$, $L_{Emission,i}$, $L_{geräusch}$) gewichtet werden und die gewichteten Bewertungsgrößen zu dem Verknüpfungsergebnis ($F$) verknüpft werden.

5. Verfahren nach Anspruch 1 oder 2, **dadurch gekennzeichnet, daß** das Optimierungverfahren derart durchgeführt wird, daß die zu einem Satz gehörenden Bewertungsgrößen ($G_{Moment}$, $G_{eta}$, $L_{Emission,i}$, $L_{geräusch}$) zu einer gewichteten Summe *(F)* verknüpft werden und zur Auswahl des optimalen Betriebspunkts ($x_{opt}$) der Betriebspunkt herangezogen wird, bei dem die gewichtete Summe ($F$) einen Extremwert einnimmt.

6. Verfahren nach Anspruch 1 oder 2, **dadurch gekennzeichnet, daß** eine das Fahrverhalten des Fahrers des Kraftfahrzeugs, eine die momentane Fahrsituation des Kraftfahrzeugs und/oder eine die momentanen auf das Kraftfahrzeugs einwirkenden Umgebungseinflüsse repräsentierende Größe ermittelt wird und wenigstens eine dieser ermittelten Größen bei der Ermittlung der Bewertungsgrößen ($G_{Moment}$, $G_{eta}$, $L_{Emission,i}$, $L_{geräusch}$) und/oder bei der Auswahl des optimalen Betriebspunktes ($x_{opt}$) berücksichtigt wird.

7. Verfahren nach Anspruch 4, **dadurch gekennzeichnet, daß** eine das Fahrverhalten des Fahrers des Kraftfahrzeugs, eine die momentane Fahrsituation des Kraftfahrzeugs und/oder eine die momentanen auf das Kraftfahrzeugs einwirkenden Umgebungseinflüsse repräsentierende Größe ermittelt wird und wenigstens eine dieser ermittelten Größen zu der Gewichtung der Bewertungsgrößen herangezogen werden.

8. Verfahren nach Anspruch 1, **dadurch gekennzeichnet, daß** als Bewertungsgrößen wenigstens

- ein erster Wert ($G_{Moment}$), der die Reserve des Getriebeausgangsmoments repräsentiert, und/oder
- ein zweiter Wert ($G_{eta}$), der den Gesamtwirkungsgrad des Antriebsstranges des Fahrzeugs repräsentiert, und/oder
- ein dritter Wert ($L_{Emission,i}$), der das Emissionsverhalten unterschiedlicher Schadstoffkomponenten ($i$) repräsentiert, und/oder
- ein vierter Wert ($L_{Geräusch}$), der die Schallemission repräsentiert,

ermittelt werden.

9. Vorrichtung zur Steuerung des Antriebsstrangs eines Kraftfahrzeugs mit wenigstens einer ein einstellbares Ausgangsmoment ($md\_ma$) und eine Ausgangsdrehzahl ($n\_mot$) aufweisenden Antriebseinheit und einem zwischen der Antriebseinheit und den Rädern des Kraftfahrzeugs angeordneten und ein Ausgangsmoment ($md\_ga$) aufweisendes Getriebe, dessen Drehzahlübersetzung ($u$) einstellbar ist, wobei unterschiedliche Betriebspunkte ($x_i$) des Antriebsstranges durch wenigstens unterschiedliche Ausgangsmomente ($md\_ma_i$) der Antriebseinheit und Drehzahlübersetzungen ($u_i$) und/oder unterschiedliche Ausgangsdrehzahlen ($n\_mot_i$) der Antriebseinheit **gekennzeichnet sind, dadurch gekennzeichnet,** daß Mittel vorgesehen sind, mittels der während des Fahrbetriebes

- für mögliche Betriebspunkte ($x_i$) jeweils ein Satz von Bewertungsgrößen ($G_{Moment}$, $G_{eta}$, $L_{Emission,i}$, $L_{Geräusch}$) ermittelt wird, und

- **durch** ein Optimierungsverfahren die zu einem Satz gehörenden Bewertungsgrößen ($G_{Moment}$, $G_{eta}$, $L_{Emission,i}$, $L_{geräusch}$) verknüpft werden und zur Auswahl einer der möglichen Betriebspunkte als optimaler Betriebspunkt ($x_{opt}$) der Betriebspunkt herangezogen wird, bei dem das von dem vorgegebenen Sollwert (md_ga_soll) für das Getriebeausgangsmoment abhängige Verknüpfungsergebnis ($F$) einen Extremwert einnimmt, und
- die zu dem ausgewählten Betriebspunkt ($x_{opt}$) gehörende Getriebeübersetzung ($u_{opt}$) und/oder die zu dem ausgewählten Betriebspunkt ($x_{opt}$) gehörende Ausgangsdrehzahl ($n\_mot$) der Antriebseinheit eingestellt wird.

10. Vorrichtung zur Steuerung des Antriebsstrangs eines Kraftfahrzeugs mit wenigstens einer ein einstellbares Ausgangsmoment ($md\_ma$) und eine Ausgangsdrehzahl ($n\_mot$) aufweisenden Antriebseinheit und einem zwischen der Antriebseinheit und den Rädern des Kraftfahrzeugs angeordneten und ein Ausgangsmoment ($md\_ga$) aufweisendes Getriebe, dessen Drehzahlübersetzung ($u$) einstellbar ist, wobei unterschiedliche Betriebspunkte ($x_i$) des Antriebsstranges durch wenigstens unterschiedliche Ausgangsmomente ($md\_ma_i$) der Antriebseinheit und Drehzahlübersetzungen ($u_i$) und/oder unterschiedliche Ausgangsdrehzahlen ($n\_mot_i$) der Antriebseinheit **gekennzeichnet sind, dadurch gekennzeichnet,** daß Mittel vorgesehen sind, mittels der während des Fahrbetriebes

- für mögliche Betriebspunkte ($x_i$) jeweils ein Satz von Bewertungsgrößen ($G_{Moment}$, $G_{eta}$, $L_{Emission,i}$, $L_{Geräusch}$) ermittelt wird, wobei als Bewertungsgrößen wenigstens

  - ein erster Wert ($G_{Moment}$), der die Reserve des Getriebeausgangsmoments repräsentiert, und/oder
  - ein zweiter Wert ($G_{eta}$), der den Gesamtwirkungsgrad des Antriebsstranges des Fahrzeugs repräsentiert, und/oder
  - ein dritter Wert ($L_{Emission,i}$), der das Emissionsverhalten unterschiedlicher Schadstoffkomponenten ($i$) repräsentiert, und/oder
  - ein vierter Wert ($L_{Geräusch}$), der die Schallemission repräsentiert,

  ermittelt werden, und
- **durch** ein Optimierungsverfahren basierend auf den ermittelten Bewertungsgrößen einer der möglichen Betriebspunkte als optimaler Betriebspunkt ($x_{opt}$) ausgewählt wird, und
- die zu dem ausgewählten Betriebspunkt ($x_{opt}$) gehörende Getriebeübersetzung ($u_{opt}$) und/oder die zu dem ausgewählten Betriebspunkt ($x_{opt}$) gehörende Ausgangsdrehzahl ($n\_mot$) der Antriebseinheit eingestellt wird.

11. Vorrichtung nach Anspruch 10, **dadurch gekennzeichnet, daß** das Optimierungverfahren derart durchgeführt wird, daß die zu einem Satz gehörenden Bewertungsgrößen ($G_{Moment}$, $G_{eta}$, $L_{Emission,i}$, $L_{geräusch}$) verknüpft werden und zur Auswahl des optimalen Betriebspunkts ($x_{opt}$) der Betriebspunkt herangezogen wird, bei dem das Verknüpfungsergebnis ($F$) einen Extremwert einnimmt.

12. Vorrichtung nach Anspruch 11, **dadurch gekennzeichnet, daß** die zu einem Satz gehörenden Bewertungsgrößen ($G_{Moment}$, $G_{eta}$, $L_{Emission,i}$, $L_{geräusch}$) gewichtet werden und die gewichteten Bewertungsgrößen zu dem Verknüpfungsergebnis ($F$) verknüpft werden.

## Claims

1. Method for controlling the drive train of a motor vehicle having at least one drive unit which has an adjustable output torque ($md\_ma$) and an output speed ($n\_mot$), and a gearbox which is arranged between the drive unit and the wheels of the motor vehicle and has an output torque ($md\_ga$) and whose rotational speed transmission ratio (u) is adjustable, a set-point value ($md\_ga\_setp$) being predefined for the gearbox output torque, in particular as a function of the sensed position of an accelerator pedal which can be activated by the driver of the motor vehicle, and different operating points ($x_i$) of the drive train are **characterized by** at least different output torques ($md\_ma_i$) of the drive unit and rotational speed transmission ratios ($u_i$) and/or different output speeds ($n\_mot_i$) of the drive unit, **characterized in that** during the driving mode

   - in each case a set of evaluation variables ($G_{Torque}$, $G_{eta}$, $L_{Emission,i}$, $L_{Noise}$) is emitted for possible operating points ($x_i$), and
   - the evaluation variables ($G_{Torque}$, $G_{eta}$, $L_{Emission,i}$, $L_{Noise}$) which are associated with a set are logically linked by means of an optimization method and the operating point at which the logic linking result ($F$) which is dependent on the predefined set-point value ($md\_ga\_setp$) for the gearbox output torque assumes an extreme

**15**

value is used to select one of the possible operating points as an optimum operating point ($x_{opt}$), and

- the gearbox transmission ratio ($u_{opt}$) which is associated with the selected operating point ($x_{opt}$) and/or the output speed ($n\_mot$), associated with the selected operating point ($x_{opt}$), of the drive unit is set.

2. Method for controlling the drive train of a motor vehicle having at least one drive unit which has an adjustable output torque ($md\_ma$) and an output speed ($n\_mot$), and a gearbox which is arranged between the drive unit and the wheels of the motor vehicle and has an output torque ($md\_ga$) and whose rotational speed transmission ratio ($u$) is adjustable, a set-point value ($md\_ga\_setp$) for the gearbox output torque being predefined as a function of the sensed position of an accelerator pedal which can be activated by the driver of the motor vehicle, and different operating points ($x_i$) of the drive train are **characterized by** at least different output torques ($md\_ma_i$) of the drive unit and rotational speed transmission ratios ($u_i$) and/or different output torques ($n\_mot_i$) of the drive unit, **characterized in that** during the driving mode

   - in each case a set of evaluation variables ($G_{Torque}$, $G_{eta}$, $L_{Emission,i}$, $L_{Noise}$) being determined for possible operating points ($x_i$), the following being determined as evaluation variables: at least

      - one first value ($G_{Torque}$) which represents the reserve of the gearbox output torque and/or
      - one second value ($G_{eta}$) which represents the overall efficiency of the drive train of the vehicle, and/or
      - one third value ($L_{Emission,i}$) which represents the emission behaviour of different pollutant components ($i$), and/or
      - one fourth value ($L_{Noise}$) which represents the sound emission, and

   - one of the possible operating points is selected as an optimum operating point ($x_{opt}$) by means of an optimization method based on the evaluation variables which are determined, and
   - the gearbox transmission ratio ($u_{opt}$) which is associated with the selected operating point ($x_{opt}$) and/or the output speed ($n\_mot$), which is associated with the selected operating point ($x_{opt}$) of the drive unit is selected.

3. Method according to Claim 2, **characterized in that** the optimization method is carried out in such a way that the evaluation variables ($G_{Torque}$, $G_{eta}$, $L_{Emission,i}$, $L_{Noise}$) which are associated with a set are logically linked and the operating point at which the logic linking result ($F$) assumes an extreme value is used to select the optimum operating point ($x_{opt}$).

4. Method according to Claim 1 or 3, **characterized in that** the evaluation variables ($G_{Torque}$, $G_{eta}$, $L_{Emission,i}$, $L_{Noise}$) which are associated with a set are weighted and the weighted evaluation variables are logically linked to form the logic linking result ($F$).

5. Method according to Claim 1 or 2, **characterized in that** the optimization method is carried out in such a way that the evaluation variables ($G_{Torque}$, $G_{eta}$, $L_{Emission,i}$, $L_{Noise}$) which are associated with a set are logically linked to form a weighted sum ($F$) and the operating point at which the weighted sum ($F$) assumes an extreme value is used to select the optimum operating point ($x_{opt}$).

6. Method according to Claim 1 or 2, **characterized in that** a variable which represents the driving behaviour of the driver of the motor vehicle, a variable which represents the instantaneous driving situation of the motor vehicle and/or a variable which represents the instantaneous ambient influences acting on the vehicle are determined and at least one of these variables which are determined is taken into account in the determination of the evaluation variables ($G_{Torque}$, $G_{eta}$, $L_{Emission,i}$, $L_{Noise}$) and/or in the selection of the optimum operating point ($x_{opt}$).

7. Method according to Claim 4, **characterized in that** a variable which represents the driving behaviour of the driver of the motor vehicle, a variable which represents the instantaneous driving situation of the motor vehicle and/or a variable which represents the instantaneous ambient influences acting on the motor vehicle are determined and at least one these variables which are determined is used to weight the evaluation variables.

8. Method according to Claim 1, **characterized in that** the following are used as evaluation variables: at least

   - one first value ($G_{Torque}$) which represents the reserve of the gearbox output torque, and/or
   - one second value ($G_{eta}$) which represents the overall efficiency of the drive train of the vehicle, and/or
   - one third value ($L_{Emission,i}$) which represents the emission behaviour of different pollutant components ($i$), and/or

- one fourth value ($L_{Noise}$) which represents the sound emission.

9. Device for controlling the drive train of a motor vehicle having at least one drive unit which has an adjustable output torque ($md\_ma$) and an output torque ($n\_mot$), and a gearbox which is arranged between the drive unit and the wheels of the motor vehicle and has an output torque ($md\_ga$) and whose rotational speed transmission ratio ($u$) is adjustable, different operating points ($x_i$) of the drive train being **characterized by** at least different output torques ($md\_ma_i$) of the drive unit and rotational speed transmission ratios ($u_i$) and/or different output speeds ($n\_mot_i$) of the drive unit, **characterized in that** means are provided with which, during the driving mode

   - in each case a set of evaluation variables ($G_{Torque}$, $G_{eta}$, $L_{Emission,i}$, $L_{Noise}$) is determined for possible operating points ($x_i$), and
   - the evaluation variables ($G_{Torque}$, $G_{eta}$, $L_{Emission,i}$, $L_{Noise}$) which are associated with a set are logically linked by means of an optimization method and the operating point at which the logic linking result ($F$) which is dependent on the predefined set-point value ($md\_ga\_setp$) for the gearbox output torque assumes an extreme value is used to select one of the possible operating points as an optimum operating point ($x_{opt}$), and
   - the gearbox transmission ratio ($u_{opt}$) which is associated with the selected operating point ($x_{opt}$) and/or the output speed ($n\_mot$), which is associated with the selected operating point ($x_{opt}$), of the drive unit is set.

10. Device for controlling the drive train of a motor vehicle having at least one drive unit which has an adjustable output torque ($md\_ma$) and an output speed ($n\_mot$) and a gearbox which is arranged between the drive unit and the wheels of the motor vehicle and has an output torque ($md\_ga$) and whose rotational speed transmission ratio ($u$) is adjustable, different operating points ($x_i$) of the drive train being **characterized by** at least different output torques ($md\_ma_i$) of the drive unit and rotational speed transmission ratios ($u_i$) and/or different output speeds ($n\_mot_i$) of the drive unit, **characterized in that** means are provided with which, during the driving mode

   - in each case a set of evaluation variables ($G_{Torque}$, $G_{eta}$, $L_{Emission,i}$, $L_{Noise}$) is determined for possible operating points ($x_i$), the following being determined as evaluation variables: at least

      - one first value ($G_{Torque}$) which represents the reserve of the gearbox output torque and/or
      - one second value ($G_{eta}$) which represents the overall efficiency of the drive train of the vehicle, and/or
      - one third value ($L_{Emission,i}$) which represents the emission behaviour of different pollutant components ($i$), and/or
      - one fourth value ($L_{Noise}$) which represents the sound emission, and

   - one of the possible operating points is selected as an optimum operating point ($x_{opt}$) by means of an optimization method based on the evaluation variables which are determined, and
   - the gearbox transmission ratio ($u_{opt}$) which is associated with the selected operating point ($x_{opt}$) and/or the output speed ($n\_mot$), which is associated with the selected operating point ($x_{opt}$) of the drive unit is selected.

11. Device according to Claim 10, **characterized in that** the optimization method is carried out in such a way that the evaluation variables ($G_{Torque}$, $G_{eta}$, $L_{Emission,i}$, $L_{Noise}$) which are associated with a set are logically linked and the operating point at which the logic linking result ($F$) assumes an extreme value is used to select the optimum operating point ($x_{opt}$).

12. Device according to Claim 11, **characterized in that** the evaluation variables $(G_{Torque}$, $G_{eta}$, $L_{Emission,i}$, $L_{Noise})$ which are associated with a set are weighted and the weighted evaluation variables are logically linked to form the logic linking result(F).

**Revendications**

1. Procédé de commande de la ligne d'entraînement d'un véhicule automobile avec au moins une unité d'entraînement présentant un couple de sortie réglable (md_ma) et un régime de sortie (n_mot), et disposée entre l'unité d'entraînement et les roues du véhicule automobile et présentant un couple de sortie (md_ga), une boîte de vitesses dont le rapport de régime (u) est réglable, selon lequel une valeur de consigne (md_ga_soll) est prescrite pour le couple de sortie de la boîte de vitesses, en particulier en fonction de la position enregistrée d'une pédale d'accélérateur pouvant être actionnée par le conducteur du véhicule automobile, et avec différents points de fonctionnement (x_i) de la ligne d'entraînement spécifiés par au moins différents couples de sortie (md_ma_i) de l'unité

d'entraînement et rapports de régime ($u_i$) et/ou différents régimes de sortie (n_mot$_i$) de l'unité d'entraînement,
**caractérisé en ce que**
pendant le fonctionnement,

- un ensemble de grandeurs d'évaluation ($G_{Moment}$, $G_{eta}$, $L_{Emission,i}$, $L_{Geräusch}$) est déterminé à chaque fois pour des points de fonctionnement ($x_i$) possibles, et
- un procédé d'optimisation relie les grandeurs d'évaluation ($G_{Moment}$, $G_{eta}$, $L_{Emission,i}$, $L_{Geräusch}$) appartenant à un ensemble et, pour la sélection d'un des points de fonctionnement possibles, on utilise, en tant que point de fonctionnement optimal ($x_{opt}$), le point de fonctionnement pour lequel le résultat de liaison (F) dépendant de la valeur de consigne (md_ga_soll) prescrite pour le couple de sortie de la boîte de vitesses prend une valeur extrême, et
- le rapport de boîte de vitesses ($u_{opt}$) appartenant au point de fonctionnement ($x_{opt}$) sélectionné et/ou le régime de sortie (n_mot) de la ligne d'entraînement appartenant au point de fonctionnement ($x_{opt}$) est réglé.

2. Procédé de commande de la ligne d'entraînement d'un véhicule automobile avec au moins une unité d'entraînement présentant un couple de sortie réglable (md_ma) et un régime de sortie (n_mot), et une boîte de vitesses disposée entre l'unité d'entraînement et les roues du véhicule automobile et présentant un couple de sortie (md_ga), boîte de vitesses dont le rapport de régime (u) est réglable, dans lequel une valeur de consigne (md_ga_soll) est prescrite pour le couple de sortie de la boîte de vitesses, en particulier en fonction de la position enregistrée d'une pédale d'accélérateur pouvant être actionnée par le conducteur du véhicule automobile, et dans lequel différents points de fonctionnement ($x_i$) de la ligne d'entraînement sont spécifiés par au moins différents couples de sortie (md_ma$_i$) de l'unité d'entraînement et rapports de régime ($u_i$) et/ou différents régimes de sortie (n_mot$_i$) de l'unité d'entraînement,
**caractérisé en ce que**
pendant le fonctionnement,

- un ensemble de grandeurs d'évaluation ($G_{Moment}$, $G_{eta}$, $L_{Emission,i}$, $L_{Geräusch}$) est déterminé à chaque fois pour des points de fonctionnement ($x_i$) possibles, à l'occasion de quoi, en tant que grandeurs d'évaluation, on détermine au moins
- une première valeur ($G_{Moment}$), qui représente la réserve du couple de sortie de boîte de vitesses, et/ou
- une deuxième valeur ($G_{eta}$), qui représente le rendement total de la ligne d'entraînement du véhicule automobile, et/ou
- une troisième valeur ($L_{Emission,i}$), qui représente le comportement en émission de différents composants polluants (i), et/ou
- une quatrième valeur ($L_{Geräusch}$), qui représente les émissions sonores, et
- un procédé d'optimisation sélectionne, sur la base des grandeurs d'évaluation déterminées, un des possibles points de fonctionnement en tant que point de fonctionnement optimal ($x_{opt}$), et
- le rapport de boîte de vitesses ($u_{opt}$) appartenant au point de fonctionnement optimal ($x_{opt}$) sélectionné et/ou le régime de sortie (n_mot) de l'unité d'entraînement appartenant au point de fonctionnement optimal ($x_{opt}$) sélectionné est réglé.

3. Procédé suivant la revendication 2,
**caractérisé en ce que**
le procédé d'optimisation est réalisé de telle sorte que les grandeurs d'évaluation ($G_{Moment}$, $G_{eta}$, $L_{Emission,i}$, $L_{Geräusch}$) appartenant à un ensemble sont reliées et **en ce qu'**on utilise, pour la sélection du point de fonctionnement optimal ($x_{opt}$), le point de fonctionnement pour lequel le résultat de liaison (F) prend une valeur extrême.

4. Procédé suivant la revendication 1 ou 3,
**caractérisé en ce que**
les grandeurs d'évaluation ($G_{Moment}$, $G_{eta}$, $L_{Emission,i}$, $L_{Geräusch}$) appartenant à un ensemble sont pondérées et les grandeurs d'évaluation pondérées sont reliées en un résultat de liaison (F).

5. Procédé suivant la revendication 1 ou 2,
**caractérisé en ce que**
le procédé d'optimisation est réalisé de telle sorte que les grandeurs d'évaluation ($G_{Moment}$, $G_{eta}$, $L_{Emission,i}$, $L_{Geräusch}$) appartenant à un ensemble sont reliées en une somme pondérée (F) et, pour la sélection du point de fonctionnement optimal ($x_{opt}$), on utilise le point de fonctionnement pour lequel la somme pondérée (F) prend une valeur extrême.

6. Procédé suivant la revendication 1 ou 2,
   **caractérisé en ce qu'**
   on détermine une grandeur représentant le comportement de conduite du conducteur de véhicule automobile, une grandeur représentant la situation de conduite momentanée du véhicule automobile et/ou une grandeur représentant les influences ambiantes momentanées agissant sur le véhicule automobile et **en ce qu'**au moins une de ces grandeurs déterminées est prise en considération lors de la détermination des grandeurs d'évaluation ($G_{Moment}$, $G_{eta}$, $L_{Emission,i}$, $L_{Geräusch}$) et/ou lors de la sélection du point de fonctionnement optimal ($x_{opt}$).

7. Procédé suivant la revendication 4,
   **caractérisé en ce qu'**
   on détermine une grandeur représentant le comportement de conduite du conducteur de véhicule automobile, une grandeur représentant la situation de conduite momentanée du véhicule automobile et/ou une grandeur représentant les conditions ambiantes momentanées agissant sur le véhicule automobile et **en ce qu'**on utilise au moins l'une de ces grandeurs déterminées pour pondérer les grandeurs d'évaluation.

8. Procédé suivant la revendication 1,
   **caractérisé en ce qu'**
   en tant que grandeurs d'évaluation, on détermine au moins

   - une première valeur ($G_{Moment}$), qui représente la réserve du couple de sortie de boîte de vitesses, et/ou
   - une deuxième valeur ($G_{eta}$), qui représente le rendement total de la ligne d'entraînement du véhicule automobile, et/ou
   - une troisième valeur ($L_{Emission,i}$), qui représente le comportement en émission de différents composants polluants (i), et/ou
   - une quatrième valeur ($L_{Geräusch}$) , qui représente les émissions sonores.

9. Dispositif de commande de la ligne d'entraînement d'un véhicule automobile avec au moins une unité d'entraînement présentant un couple de sortie réglable (md_ma) et un régime de sortie (n_mot), et une boîte de vitesses disposée entre l'unité d'entraînement et les roues du véhicule automobile et présentant un couple de sortie (md_ga), boîte de vitesses dont le rapport de régime (u) est réglable, dans lequel différents points de fonctionnement ($x_i$) de la ligne d'entraînement sont **caractérisés par** au moins différents couples de sortie ($md\_ma_i$) de l'unité d'entraînement et rapports de régime ($u_i$) et/ou différents régimes de sortie ($n\_mot_i$) de l'unité d'entraînement,
   **caractérisé en ce que**
   des moyens sont prévus, au moyen desquels, pendant le fonctionnement,

   - un ensemble de grandeurs d'évaluation ($G_{Moment}$, $G_{eta}$, $L_{Emission,i}$, $L_{Geräusch}$) est déterminé à chaque fois pour des points de fonctionnement ($x_i$) possibles, et
   - un procédé d'optimisation relie les grandeurs d'évaluation ($G_{Moment}$, $G_{eta}$, $L_{Emission,i}$, $L_{Geräusch}$) appartenant à un ensemble, et pour la sélection d'un des points de fonctionnement possibles, on utilise, en tant que point de fonctionnement optimal ($x_{opt}$), le point de fonctionnement pour lequel le résultat de liaison (F) dépendant de la valeur de consigne (md_ga_soll) prescrite pour le couple de sortie de la boîte de vitesses prend une valeur extrême, et
   - le rapport de boîte de vitesses ($u_{opt}$) appartenant au point de fonctionnement ($x_{opt}$) sélectionné et/ou le régime de sortie (n_mot) de la ligne d'entraînement appartenant au point de fonctionnement ($x_{opt}$) est réglé.

10. Dispositif de commande de la ligne d'entraînement d'un véhicule automobile avec au moins une unité d'entraînement présentant un couple de sortie réglable (md_ma) et un régime de sortie (n_mot), et une boîte de vitesses disposée entre l'unité d'entraînement et les roues du véhicule automobile et présentant un couple de sortie (md_ga), boîte de vitesses dont le rapport de régime (u) est réglable, dans lequel différents points de fonctionnement ($x_i$) de la ligne d'entraînement sont **caractérisés par** au moins différents couples de sortie ($md\_ma_i$) de l'unité d'entraînement et rapports de régime ($u_i$) et/ou différents régimes de sortie ($n\_mot_i$) de l'unité d'entraînement,
    **caractérisé en ce que**
    des moyens sont prévus au moyen desquels, pendant le fonctionnement,

    - un ensemble de grandeurs d'évaluation ($G_{Moment}$, $G_{eta}$, $L_{Emission,i}$, $L_{Geräusch}$) est déterminé à chaque fois pour des points de fonctionnement ($x_i$) possibles, à l'occasion de quoi on détermine comme grandeurs d'évaluation

- une première valeur ($G_{Moment}$), qui représente la réserve du couple de sortie de boîte de vitesses, et/ou
- une deuxième valeur ($G_{eta}$), qui représente le rendement total de la ligne d'entraînement du véhicule automobile, et/ou
- une troisième valeur ($L_{Emission,i}$), qui représente le comportement en émission de différents composants polluants (i), et/ou
- une quatrième valeur ($L_{Geräusch}$), qui représente les émissions sonores, et
- un procédé d'optimisation sélectionne, sur la base des grandeurs d'évaluation déterminées, un des possibles points de fonctionnement en tant que point de fonctionnement optimal ($x_{opt}$), et
- le rapport de boîte de vitesses ($u_{opt}$) appartenant au point de fonctionnement optimal ($x_{opt}$) sélectionné et/ou le régime de sortie (n_mot) de l'unité d'entraînement appartenant au point de fonctionnement optimal ($x_{opt}$) sélectionné est réglé.

11. Dispositif selon la revendication 10,
   **caractérisé en ce que**
   le procédé d'optimisation est réalisé de telle sorte que les grandeurs d'évaluation ($G_{Moment}$, $G_{eta}$, $L_{Emission,i}$, $L_{Geräusch}$) appartenant à un ensemble sont reliées et **en ce qu'**on utilise, pour la sélection du point de fonctionnement optimal ($x_{opt}$), le point de fonctionnement pour lequel le résultat de liaison (F) prend une valeur extrême.

12. Dispositif selon la revendication 11,
   **caractérisé en ce que**
   les grandeurs d'évaluation ($G_{Moment}$, $G_{eta}$, $L_{Emission,i}$, $L_{Geräusch}$) appartenant à un ensemble sont pondérées et les grandeurs d'évaluation pondérées sont reliées en un résultat de liaison (F).

FIG. 1

FIG. 2

EP 0 907 524 B1

FIG. 3

FIG. 4

FIG. 5

602 — $F_0 = F(x, n\_ga, md\_ga$ ⟵ $x, n\_ga, md\_ga$

$i = 1$

603 — $n\_mot_i$

604 — $x_i = x_i(n\_mot_i)$

$i = i+1$

605 — $F_i = F(x_i, n\_ga, md\_ga$ ⟵ $x, n\_ga, md\_ga$

606 — $F_0, F_1, \cdots, F_i$

607 — $F, x_{opt}$

601

FIG. 6